# EUROPÄISCHE PATENTANMELDUNG

(11) **EP 1 484 286 A1**
(43) Veröffentlichungstag der Anmeldung: **08.12.2004**
(21) Anmeldenummer: 04013337.3
(22) Anmeldetag: 07.06.2004
(51) Int. Cl.: C02F 3/28

(54) **Vorrichtung und Verfahren zur Anaeroben Behandlung von Abwasser**

(30) Priorität: 05.06.2003 AT 8772003
(71) Anmelder: Beisteiner, Ernst, 00-740 Warschau (PL)
(72) Erfinder: Beisteiner, Ernst, 00-740 Warschau (PL)
(74) Vertreter: Babeluk, Michael, Dipl.-Ing.

(57) **Zusammenfassung**

Die Erfindung betrifft eine Vorrichtung zur anaeroben Behandlung von Abwasser, mit einem Reaktionsbehälter (1) zur Aufnahme einer vorbestimmten Menge von Abwasser unter Luftabschluss, sowie mit einem Wärmetauscher (5) zum Erwärmen des Abwassers. Eine hohe Reinigungsleistung bei einfachem Aufbau wird dadurch erreicht, dass der Reaktionsbehälter (1) eine senkrecht angeordneten Achse (1a) aufweist, dass sich im Bereich der Achse (1a) ein Zentralrohr (4) befindet und dass der Wärmetauscher (5) das Zentralrohr (4) umgibt, wobei über den Wärmetauscher (5) Wärme dem im Reaktionsbehälter (1) befindlichen Abwasser zuführbar ist, so dass sich in dem Reaktionsbehälter (1) eine thermisch induzierte Konvektionsströmung (50, 51) ausbildet. Im weiteren betrifft die Erfindung ein Verfahren zur anaeroben Behandlung von Abwasser.

## Beschreibung

Die Erfindung betrifft eine Vorrichtung und ein Verfahren zur anaeroben Behandlung von Abwasser gemäß dem Oberbegriff der Patentansprüche 1 bzw. 13.

Bei der Reinigung von Abwasser insbesondere im Bereich der Industrie ist es vielfach erforderlich, eine anaerobe Reinigungsstufe vorzusehen. Dabei finden unter Luftabschluss bestimmte Reaktionen statt, bei denen einerseits Gas gebildet wird und andererseits Schlamm entsteht. Durch diese Reaktionen wird das Abwasser in der gewünschten Weise gereinigt. Die Qualität des anaeroben Prozesses wird dabei nach verschiedenen Gesichtspunkten beurteilt. Einerseits ist die Reinigungswirkung in Relation zu der notwendigen Verweilzeit in dem Reaktionsbehälter ein wichtiges Kriterium. Andererseits ist die im Verhältnis zum zu reinigenden Abwasser erzeugte Schlammmenge ein wichtiger Beurteilungsmaßstab. Darüber hinaus spielen Randbedingungen eine Rolle, wie einfacher und kostengünstiger Aufbau des Reaktionsbehälters und der übrigen benötigten Anlagenkomponenten, ein einfaches, robustes und kostengünstiges Betriebsverhalten der Anlage und die Wartungsfreundlichkeit.

Es ist bekannt, dass die Reaktionen in einem anaeroben Reaktor ablaufenden Reaktionen bevorzugt in einem Bereich erhöhter Temperatur ablaufen. Es wird daher vielfach das Abwasser vor dem Eintritt in den Reaktionsbehälter erwärmt, um eine schnellere und umfassendere Reaktion zu erreichen, was im Sinn der obigen Forderungen förderlich ist. Dennoch sind die mit bekanten Lösungen erreichten Ergebnisse nicht vollständig zufriedenstellend.

Aufgabe der Erfindung ist es, ausgehend von einer Vorrichtung der eingangs erwähnten Art Verbesserungen aufzuzeigen, die es gestatten, die Reinigungswirkung zu verbessern und gleichzeitig den übrigen oben dargestellten Anforderungen bestmöglich Rechnung zu tragen. Eine weitere Aufgabe der Erfindung ist es, das Verfahren im oben beschriebenen Sinn weiterzubilden.

Diese Aufgabe wird durch die Merkmale der Patentansprüche 1 und 13 gelöst. Wesentlich an der vorliegenden Erfindung ist die Erkenntnis, dass die in dem Reaktionsbehälter ablaufenden Reaktionen durch eine Bewegung das Abwassers begünstigt werden. Eine grundsätzlich mögliche mechanische Umwälzung ist im Hinblick auf den apparativen Aufwand und die Störungsanfälligkeit nicht erwünscht oder unzulässig. Eine thermisch induzierte Umwälzung ist einfach realisierbar und erfasst bei geometrisch vernünftiger Ausbildung des Reaktionsbehälters den gesamten Inhalt ohne tote Bereiche. Die Konvektionsströmung erfasst dabei insbesondere auch den unteren Bereich des Reaktionsbehälters, so dass in vorteilhafter Weise eine deutlich verringerte Schlammproduktion zu beobachten ist. Ein wichtiger Aspekt der Erfindung ist dabei, dass die erforderliche Wärme nicht primär über das Abwasser eingetragen wird, sondern über einen Wärmetauscher.

Die EP 0 026 619 A zeigt einen Reaktor zur Behandlung von organischen Abfällen, wie Gülle, um brennbare Gase zu erzeugen. Die vorliegende Erfindung betrifft jedoch einen Reaktor zur Behandlung von Abwasser bzw. ein Verfahren zur Behandlung von Abwasser. Die angewendeten Technologien bei der Behandlung von Abwässern unterscheiden sich grundsätzlich von denjenigen, die in der oben genannten Druckschrift offenbart sind. Zum einen steht der Behandlung von Abwasser die Reinigung des Abwassers im Vordergrund, wobei es im Allgemeinen nicht möglich oder sinnvoll ist, technisch nutzbare Gase zu erhalten. Ein weiterer wesentlicher Unterschied ist zum anderen die wesentlich geringere Viskosität des zu behandelnden Mediums.

Eine geometrisch besonders günstige Ausbildung des Reaktionsbehälters ist gegeben, wenn der Reaktionsbehälter im Wesentlichen zylindrisch ausgebildet ist, und dass das Zentralrohr konzentrisch zu der Achse ist. Durch eine im Wesentlichen rotationssymmetrische Ausbildung des Reaktionsbehälters und der darin angeordneten Komponenten, wobei sich das Abwasser in einem Ringraum zwischen dem Zentralrohr und der Außenwand befindet ergibt sich Strömung ist ebenfalls rotationssymmetrisch, so dass das durch den Wärmetauscher erwärmte Abwasser aufgrund der geringeren Dichte im Bereich rund um das Zentralrohr nach oben steigt, umgelenkt wird und entlang der kühleren Außenwand wieder zum Boden des Reaktionsbehälters absinkt.

Besonders günstig ist es, wenn der Wärmetauscher im unteren Bereich des Reaktionsbehälters, jedoch im Abstand vom Boden des Behälters angeordnet ist. Dies bedeutet, dass der Wärmetauscher im Wesentlichen vollständig in der unteren Hälfte des Reaktionsbehälters angeordnet ist. Dadurch kann erreicht werden, dass der Wärmetauscher größtenteils oberhalb des Bereichs gelegen ist, der im Normalbetrieb vom Schlamm eingenommen wird und damit voll wirksam ist. Zumindest bei hohem Schlammpegel reicht dieser jedoch an den Wärmetauscher heran oder in diesen hinein, so dass die obere Schlammschicht durch die im Bereich des Wärmetauschers besonders intensive Strömung mitgerissen wird. Dadurch wird der Stoffwechsel der in dem Reaktionsbehälter vorliegenden Mikroorganismen begünstigt und die anfallende Schlammmenge verringert. Andererseits ist oberhalb des Wärmetauschers ausreichend Raum für den Ablauf der eigentlichen Reaktionen, so dass eine kurze Verweilzeit bei hoher Reinigungswirkung erreicht werden kann.

Eine besonders einfache und wirksame Ausbildung der Erfindung ist gegeben, wenn der Wärmetauscher als Spiralrohrwärmetauscher ausgebildet ist. Der Wärmetauscher ist dabei im Wesentlichen als Rohrschlange ausgebildet, die die Wärme direkt an das Abwasser in dem Reaktionsbehälter abgibt.

Eine besonders begünstigte Ausführungsvariante der Erfindung sieht vor, dass der Wärmetauscher innerhalb eines Behälterabschnitts angeordnet ist, der zwischen 25% und 50% der Querschnittsfläche des Reaktionsbehälters einnimmt und der vorzugsweise zwischen 10% und 40% der Höhe des Reaktionsbehälters einnimmt. Es hat sich herausgestellt, dass eine besonders intensive und wirksame Strömung erzielt werden kann, wenn der Wärmetauscher im Querschnitt weniger als die Hälfte der Innenfläche des Reaktionsbehälters einnimmt, so dass die aufwärts gerichtete Strömung eine höhere Strömungsgeschwindigkeit aufweist als die abwärts gerichtete Strömung.

Die Wirksamkeit des Wärmetauschers bei der Erzeugung der Strömung im Inneren des Reaktionsbehälters kann insbesondere dadurch erhöht werden, dass der Wärmetauscher seitlich eine Ummantelung aufweist, die vorzugsweise zylindrisch ausgebildet ist.

Bei der Umsetzung des Abwassers im Reaktionsbehälter entstehen im Allgemeinen Reaktionsgase, wie etwa Methan. Diese Gase müssen kontrolliert und getrennt vom gereinigten Abwasser abgezogen werden. Um eine wirksame Trennung zu gewährleisten, ist es vorteilhaft, wenn oberhalb des Wärmetauschers eine Umlenkeinrichtung für Reaktionsgase angeordnet ist. Zusätzlich dazu kann die Abscheidung der Gas verbessert werden, indem im oberen Bereich des Reaktionsbehälters eine Abzugseinrichtung für das behandelte Abwasser mit labyrinthförmig angeordneten Führungsblechen angeordnet ist.

Eine energetisch besonders begünstigte Ausführungsvariante der Erfindung ist dadurch gekennzeichnet, dass dem Reaktionsbehälter eine Wärmepumpe zugeordnet ist, die in ihrem Wärmekreislauf mit dem Wärmetauscher in Verbindung steht und die mit ihrem Kältekreislauf mit einem weiteren, außerhalb des Reaktionsbehälters angeordneten Wärmetauscher zur Abkühlung des behandelten Abwassers in Verbindung steht. Damit kann einerseits eine im Vergleich zur eingesetzten Energie vielfache Wärmemenge in das Abwasser eingebracht werden und andererseits kann das gereinigte Abwasser entsprechend abgekühlt werden, was vielfach erforderlich ist, um gegebene Auflagen zu erfüllen.

Eine besonders wartungsfreundliche Ausbildung der Vorrichtung kann dadurch erreicht werden, dass sämtliche Zufuhrleitungen, Abzugsleitungen, Wärmeträgerleitungen und eventuelle Sensoreinrichtungen baulich mit dem Zentralrohr verbunden sind und gemeinsam mit diesem von einem feststehenden Teil des Reaktionsbehälters, der im Wesentlichen den Boden und die Seitenwände umfasst, trennbar ist. Der feststehende Teil des Reaktionsbehälters ist dabei extrem einfach aufgebaut und völlig frei von Anschlüssen, Durchführungen oder Armaturen. Damit kann die erfindungsgemäße Vorrichtung auch in kostengünstiger Weise unter Verwendung von bestehenden Behältern oder Becken realisiert werden, da der gesamte apparative Teil einfach von oben auf den feststehenden Teil des Reaktionsbehälters aufsetzbar ist.

Eine weitere vorteilhafte Ausführungsvariante sieht vor, dass das Zentralrohr einen Hohlraum aufweist, in den oben das zu behandelnde Abwasser eingeführt wird und der im unteren Bereich über Öffnungen mit dem Reaktionsbehälter in Verbindung steht, und dass der Hohlraum in thermischem Kontakt mit dem Innenraum des Reaktionsbehälters steht. Dabei ist es von besonderem Vorteil, wenn der Hohlraum ein Volumen aufweist, das zwischen 2% und 10%, vorzugsweise zwischen 3% und 5% des Volumens des Reaktionsbehälters beträgt. Insbesondere sollte dabei der Wärmetauscher teilweise mit dem Zentralrohr in thermischer Verbindung stehen. Es hat sich herausgestellt, dass die Zuführung von zu kaltem Abwasser die in dem Reaktionsbehälter ablaufenden Reaktionen stört, was sich nachteilig auf den Wirkungsgrad auswirkt. Durch das Vorsehen eines entsprechenden Puffervolumens in dem Zentralrohr, das etwa der in einem Reaktionszyklus ausgetauschten Abwassermenge entspricht, wird eine teilweise thermische Anpassung des neu zugeführten Abwassers an das in dem Reaktionsbehälter befindliche Abwasser erreicht. Dies ist vom besonderem Vorteil, wenn die Temperatur des zu reinigenden Abwassers unvorhersehbaren Schwankungen unterworfen ist.

Es ist im weiteren bevorzugt, wenn eine Schlammabzugsleitung vorgesehen ist, die mindestens eine Ansaugöffnung im unteren Bereich des Reaktionsbehälters aufweist und die vorzugsweise ein außerhalb des Reaktionsbehälters angeordnetes Fallrohr besitzt. Auf diese Weise kann die potentielle Energie des Schlamms dazu ausgenützt werden, eine schnelle Entfernung des Schlamms zu gewährleisten. Dabei kann der apparative Aufwand für Pumpen oder dgl. minimiert werden.

Eine besonders einfache und wirksame Überwachung des Betriebs der Vorrichtung kann dadurch erreicht werden, dass mindestens ein Probenentnahmerohr vorgesehen ist, das eine Probenansaugöffnung aufweist, die außerhalb des Wärmetauschers in einer Höhe in den Reaktionsbehälter mündet, die vorzugsweise im Bereich der Höhe des Wärmetauschers liegt.

Vorzugsweise ist weiters vorgesehen dass der Abzugsraum eine Oberkante aufweist, über die Abwasser in einen anschließenden Aufnahmeraum überströmen kann und dass der Abzugsraum nach oben offen ist. Dadurch kann Schwimmschlamm wirksam entfernt werden, und eine optische Kontrolle ist einfach möglich.

Weiters betrifft die Erfindung eine Verfahren zur anaeroben Behandlung von Abwasser, bei dem das zu behandelnde Abwasser in einen Reaktionsbehälter geführt wird und unter Luftabschluss eine vorbestimmte Zeit reagieren gelassen wird, wobei dem Abwasser Wärme zugeführt wird. Dieses Verfahren ist erfindungsgemäß dadurch gekennzeichnet, dass die Wärme über einen im Reaktionsbehälter angeordneten Wärmetauscher in einem Teil des Behälters so zugeführt wird, dass sich in dem Reaktionsbehälter eine thermisch induzierte Konvektionsströmung ausbildet.

Als besonders wirksam hat es sich herausgestellt, wenn das Abwasser dem Reaktionsbehälter diskontinuierlich zugeführt wird. Bei einem sogenannten SBR-Verfahren wird das zu reinigende Abwasser in einem Pufferspeicher gesammelt und in vorbestimmten Quantitäten portionsweise dem Reaktionsbehälter zugeführt.

Wie oben beschrieben ist es günstig, wenn das Abwasser dem Reaktionsbehälter über ein Zentralrohr zugeführt wird, in dem das Abwasser durch thermischen Kontakt mit dem Abwasser im Reaktionsbehälter und gegebenenfalls mit dem Wärmetauscher erwärmt wird und insbesondere wenn das bei einem Befüllvorgang zugeführte Abwasservolumen kleiner ist als das Volumen des Zentralrohres.

Die Stärke der in dem Reaktionsbehälter vorliegenden Konvektionsströmung ist im Wesentlichen von den Temperaturdifferenzen im Innenraum ab. Diese hängen wesentlich von den Wärmeverlusten an der Außenwand des Reaktionsbehälters ab. Sofern die natürlichen Wärmeverluste nicht ausreichen, eine Strömung der gewünschten Stärke zu erreichen, ist es vorteilhaft, dass über die Außenwand des Reaktionsbehälters Wärme abgeführt wird. Dies kann über eine externe Kühlung erfolgen oder aber über einen Wärmetauscher, der mit der Wärmepumpe verbunden ist und das Abwasser im Wandbereich selektiv abkühlt.

Das erfindungsgemäße Verfahren wird bevorzugt so betrieben, dass durch eine Wärmepumpe dem aus dem Reaktionsbehälter abgezogenen Abwasser Wärme entzogen wird und dem Wärmetauscher in dem Reaktionsbehälter zugeführt wird, um das Abwasser in dem Reaktionsbehälter auf einer Temperatur zu halten, die vorzugsweise in einem Bereich zwischen 25°C und 35°C liegt.

Die Erfindung wird im Folgenden anhand des in den Figuren dargestellten Ausführungsbeispiels näher erläutert. Es zeigen:
- Fig. 1: eine schematische Darstellung des Reaktionsbehälters der erfindungsgemäßen Vorrichtung im Längsschnitt;

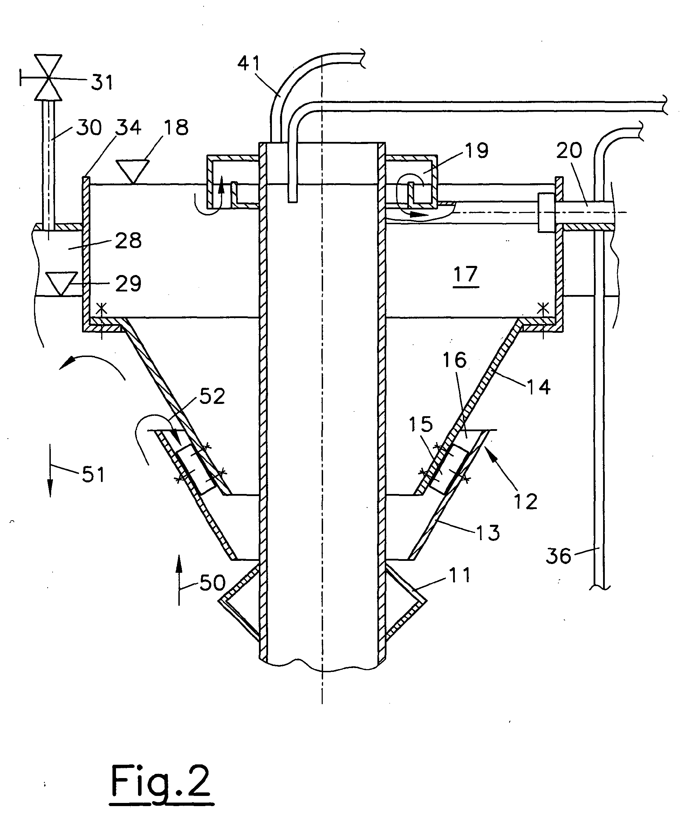

- Fig. 2: ein Detail von Fig. 1; und
- Fig. 3: eine schematische Gesamtansicht der erfindungsgemäßen Vorrichtung.

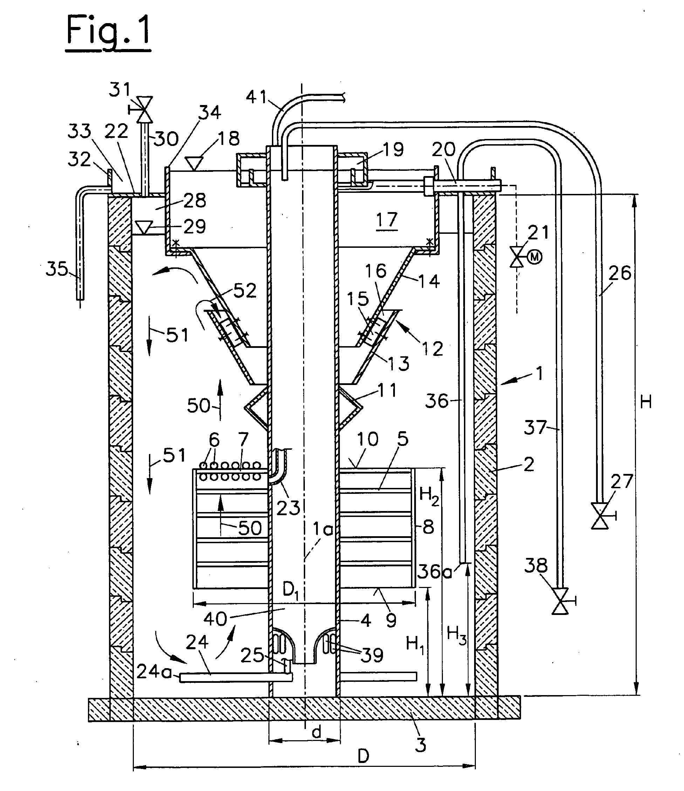

Aus Fig. 1 ist ersichtlich, dass der Reaktionsbehälter 1 aus einer zylindrischen Wand 2 und einem Behälterboden 3 besteht. Die zylindrische Wand 2 kann dabei in an sich bekannter Weise aus Betonringen hergestellt sein, so dass sich ein zylindrischer Reaktionsbehälter 1 ergibt.

Typische Abmessungen des Reaktionsbehälters 1 sind ein Durchmesser D von 2 m bis 3 m und eine Höhe H von etwa 4,5 m bis 6 m.

Konzentrisch zur senkrechten Achse 1a des Reaktionsbehälters 1 ist ein Zentralrohr 4 angeordnet, das einen Durchmesser d aufweist, der etwa 20% des inneren Durchmessers D des Reaktionsbehälters 1 beträgt und das sich über die gesamte Höhe H des Reaktionsbehälters 1 erstreckt. Am Zentralrohr 4 ist ein Wärmetauscher 5 in der Form eines Spiralrohrwärmetauscher s fest angebracht. Der Wärmetauscher 5 besteht aus Wärmeübertragungsrohren 6, die auf Halterungen 7 geführt sind und im thermischen Kontakt mit dem Inhalt des Reaktionsbehälters 1 stehen. Seitlich ist am Wärmetauscher 5 eine Ummantelung 8 in der Form eines zylindrischen Bleches angebracht. Die untere Begrenzung 9 des Wärmetauschers 5 befindet sich in einer Höhe H₁, die etwa einem Viertel der Höhe H des Reaktionsbehälters 1 entspricht, und die obere Begrenzung 10 des Wärmetauschers 5 befindet sich in einer Höhe H₂, die etwas der Hälfte der Höhe H des Reaktionsbehälters 1 entspricht. Der Durchmesser D₁ des Wärmetauschers 5 beträgt etwa 65% des inneren Durchmessers D des Reaktionsbehälters 1, so dass die Querschnittsfläche des Wärmetauschers 5 etwa 40% der gesamten inneren Querschnittsfläche des Reaktionsbehälters 1 beträgt. Auf diese Weise wird dem Umstand Rechnung getragen, dass die Strömung durch den Wärmetauscher (Pfeile 50) eine höhere Strömungsgeschwindigkeit aufweisen sollte als die abwärts gerichtete Strömung außerhalb davon (Pfeile 51).

Oberhalb des Wärmetauschers 5 ist eine Umlenkeinrichtung 11 für die sich bildenden Reaktionsgase am Zentralrohr 4 angebracht. Die Umlenkeinrichtung 11 weist die Form einer kegelförmigen Schikane auf, die aufsteigende Gasbläschen vom Zentralrohr 4 wegdrängt. Oberhalb der Umlenkeinrichtung 11 ist eine allgemein mit 12 bezeichnete Abzugseinrichtung für das behandelte Abwasser vorgesehen, die labyrithförmig angeordnet ist Die Ahzugseinrichtung 12 besteht aus einem ersten kegelstumpfförmigen Blech 13, das konzentrisch zur Achse 1a und zum Zentralrohr 4 angeordnet ist und sich nach oben hin trichterförmig öffnet. Oberhalb und in dieses Führungsblech 13 hineinragend ist ein weiteres Führungsblech 14 vorgesehen, das in ähnlicher Weise kegelstumpfförmig nach oben offen hin ausgebildet ist. Zwischen den Führungsblechen 13 und 14 ist ein durch Distanzhalter 15 definierter Strömungskanal 16 für das abzuziehende Abwasser ausgebildet.

Das Blech 13 ist unten offen, um ein Austreten des oberhalb anfallenden Schlamms zu ermöglichen.

Das obere Führungsblech 14 öffnet sich oben in einen zylindrischen Abzugsraum 17, in dem das behandelte Abwasser mit der freien Wasseroberfläche 18 vorliegt. Ein Abzugslabyrinth 19 dient in an sich bekannter Weise dazu, Schaum und andere schwimmende Residuen zurückzuhalten. Über eine Abzugsleitung 20 mit einem Abzugsventil 21 wird das behandelte Abwasser je nach Bedarf weiteren Reinigungsstufen zugeführt. Baulich sind nicht nur der Wärmetauscher 5, sondern auch die Führungsbleche 13, 14, der Abzugsraum 17 und das Abzugslabyrinth 19 fest mit dem Zentralrohr 4 verbunden. Weiters ist mit den genannten Bauteilen ein gasdichter Behälterdeckel 22 fest verbunden, so dass die gesamte bauliche Einheit auf die Seitenwand 2 des Reaktionsbehälters 1 in einfacher Weise von oben aufgesetzt werden kann. Die Wärmeträgerleitungen 23 zu Versorgung des Wärmetauschers 5 sind im Zentralrohr 4 untergebracht und nach oben herausgeführt. In gleicher Weise sind allfällige nicht dargestellte Sensoren am Zentralrohr 4 befestigt und die zugehörigen Leitungsverbindungen im Zentralrohr 4 ebenfalls nach oben hinausgeführt. Im Bereich des Bodens 3 des Reaktionsbehälters 1 sind Schlammabzugsleitungen 24 vorgesehen, die sich vom Zentralrohr 4 radial nach außen erstrecken und über weitere Leitungen 25 im Zentralrohr 4 bis zu einem Fallrohr 26 erstrecken, das außerhalb des Reaktionsbehälters 1 nach unten geführt ist. Über ein Schlammabzugsventil 27 lässt sich der Schlammabzug regeln. Der im Zug der Reaktion gebildete Schlamm wird über eine Ansaugöffnung 24a in der Schlammabzugsleitung 24 angesaugt.

Die aufsteigenden Reaktionsgase bilden im oberen Bereich des Reaktionsbehälters 1 in einem Raum radial außerhalb des Abzugsraumes 17 einen Gasraum 28 mit einer Oberfläche 29 des Abwassers. Über eine Gasabzugsleitung 30 im gasdichten Deckel 22 und ein Gasabzugsventil 31 wird die Oberfläche 29 im gewünschten Bereich gehalten. Auf diese Weise wird ein Gasvordruck im Ausmaß des Pegelunterschiedes aufrecht erhalten.

Der gasdichte Deckel 22 besitzt einen erhöhten Rand 32, wodurch ein ringförmiger Aufnahmeraum 33 radial außerhalb des Abzugsraumes 17 gebildet wird. Durch bewusste automatisch gesteuertes Schließen des Ventils 21 oder unbeabsichtigte kurzzeitige Überfüllung des Reaktionsbehälters 1 kann erreicht werden, dass die Flüssigkeitsoberfläche 18 im Abzugsraum 17 über die Oberkante 34 des Abzugsraumes 17 ansteigt und die oberste Schicht des gereinigten Abwassers in den Aufnahmeraum 33 überströmt. Auf diese Weise werden allfälliger Schaum und schwimmende Verunreinigungen in den Aufnahmeraum 33 übergeführt und können zu wieteren Behandlung über ein Abzugsrohr 35 entsorgt werden.

Weiters ist im Reaktionsbehälter 1 beispielhaft ein Probenentnahmerohr 36 dargestellt, das vom Behälterdeckel 22 senkrecht nach unten ragt. Das Probenentnahmerohr 36 ist mit einem zugehörigen Fallrohr 37 mit einem Absperrventil 38 verbunden. Durch dieses Probenentnahmerohr 36 kann jederzeit eine Abwasserprobe aus dem Reaktionsbehälter 1 entnommen werden, um den aktuellen Zustand des Abwassers beurteilen zu können. Wesentlich zur Beurteilung der gewonnen Information ist dabei die Höhe H₃ der Probenansaugöffnung 36a. In der dargestellten Ausführungsvariante liegt die Probenansaugöffnung 36a unmittelbar oberhalb der unteren Begrenzung 9 des Wärmetauschers 5, jedoch radial außerhalb davon. Im Normalbetrieb des Reaktionsbehälters 1 sollte im Bereich der Probenansauöffnung 36a kein Schlamm vorliegen. Wird hier Schlamm festgestellt, dann ist dies ein Anzeichen dafür, dass ein Schlammaustragsvorgang begonnen werden sollte. Je nach Bedarf können selbstverständlich weitere nicht dargestellte Probenentnahmerohre vorgesehen sein.

Das Zentralrohr 4 besitzt im unteren Bereich Öffnungen 39, die den Hohlraum 40 des Zentralrohres 4 nach außen hin öffnen. Der Hohlraum 40 des Zentralrohres 4 steht oben mit einer Zufuhrleitung 41 zur Zufuhr des zu reinigenden Abwassers in Verbindung.

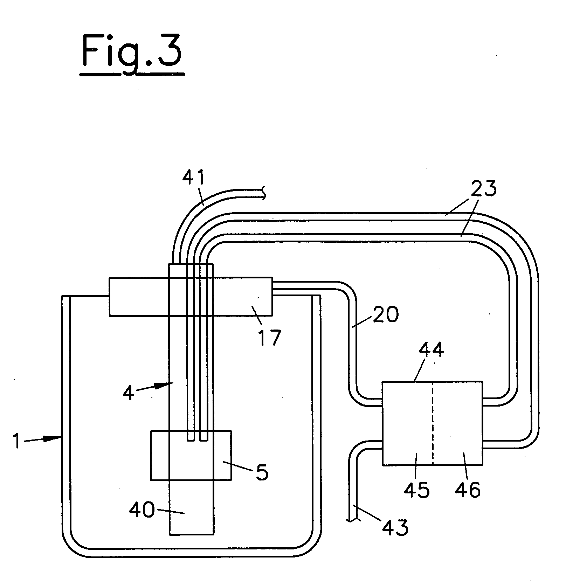

In der Folge wird der Betrieb der erfindungsgemäßen Vorrichtung anhand der schematischen Darstellung von Fig. 3 erläutert. Das zu behandelnde Abwasser wird über die Zufuhrleitung 41 in den Hohlraum 40 des Zentralrohres 4 eingebracht. Die Zufuhr erfolgt dabei nicht kontinuierlich, sondern in Intervallen, wobei das in einem Schritt zugeführte Abwasservolumen kleiner ist als das Volumen des Hohlraumes 40. Da der Hohlraum 40 in thermischem Kontakt mit dem Innenraum des Reaktionsbehälters 1 steht, kann sich das Abwasser vor dem eigentlichen Eintritt in den Reaktionsbehälter 1 so weit erwärmen, dass die Reinigungsreaktionen nicht durch einen Temperaturschock gestört werden. Gleichzeitig mit der Zufuhr des Abwassers wird über die Abzugsleitung 20 das gereinigte Abwasser aus dem Abzugsraum 17 abgeführt und durch den Kühlkreislauf 45 einer Wärmepumpe 44 abgekühlt, um über eine weitere Leitung 43 entsorgt zu werden. Die Wärmepumpe 44 nutzt die dem gereinigten Abwasser entzogene Wärme zur Versorgung des Wärmetauschers 5 über die Wärmeträgerleitungen 23. Die Wärmepumpe 44 wird dabei so geführt, dass sich im Inneren des Reaktionsbehälters 1 die gewünschte Temperatur von beispielsweise 32°C einstellt. Falls ein kontinuierlicher Betrieb der Wärmepumpe 44 erwünscht ist, können entsprechende nicht dargestellte Pufferbehälter vorgesehen sein, was die erforderliche Maximalleistung der Wärmepumpe 44 verringert.

Beim Betrieb der erfindungsgemäßen Vorrichtung wird durch die Erwärmung des Abwassers im Wärmetauscher 5 entlang der Pfeile 50 eine thermisch induzierte aufwärtsgerichtete Strömung erzeugt. Im oberen Bereich des Reaktionsbehälters 1 wird diese Strömung nach außen umgelenkt und führt entlang der Pfeile 51 im kühleren Wandbereich nach unten. Die Strömung entlang der Pfeile 50, 51 ist dabei im Wesentlichen zentralsymmetrisch um die Achse 1a. Während des Befüllvorganges tritt das zu reinigende Abwasser aus dem Hohlraum 40 des Zentralrohres 4 über die Öffnungen 39 aus und wird durch die beschriebene Strömung unmittelbar in den Wärmetauscher 5 geführt und dadurch erwärmt. Auf diese Weise kann eine Störung der ablaufenden Reaktionen durch das noch etwas zu kalte Abwasser vermieden werden. Gleichzeitig wird der im unteren Bereich des Reaktionsbehälters 1 abgesetzte Schlamm durch das neu eintretende Abwasser aufgewirbelt, was die Umsetzungsreaktionen beschleunigt. Das gereinigte Abwasser wird während der Zufuhr von frischem Abwasser in den Kanal 16 zwischen den Führungsblechen 13, 14 getrennt und gelangt in den Abzugsraum 17, von wo es über die Abzugsleitung 20 abgezogen wird. Wenn nach mehreren Behandlungszyklen festgestellt wird, dass der sich im unteren Teil des Reaktionsbehälters 1 befindliche Schlamm bis zu einer Höhe angesammelt hat, die größer ist als die Höhe H₁ der unteren Begrenzung 9 des Wärmetauschers 5, so dass eine Behinderung der Umwälzströmung zu befürchten ist, dann wird über die Schlammabzugsleitungen 24 Schlamm abgesaugt.

Es ist festzustellen, dass mit der erfindungsgemäßen Vorrichtung die anfallende Schlammmenge wesentlich geringer ist, als mit bekannten Vorrichtungen. Weiters ermöglicht die erfindungsgemäß Lösung die Erreichung eines einfachen technischen Aufbaus, hohe Wartungsfreundlichkeit und die Erreichung von hohen Reinigungsleistungen.

## Patentansprüche

1. Vorrichtung zur anaeroben Behandlung von Abwasser, mit einem Reaktionsbehälter (1) zur Aufnahme einer vorbestimmten Menge von Abwasser unter Luftabschluss, sowie mit einem Wärmetauscher (5) zum Erwärmen des Abwassers, **dadurch gekennzeichnet, dass** der Reaktionsbehälter (1) eine senkrecht angeordneten Achse (1a) aufweist, dass sich im Bereich der Achse (1a) ein Zentralrohr (4) befindet und dass der Wärmetauscher (5) das Zentralrohr (4) umgibt, wobei über den Wärmetauscher (5) Wärme dem im Reaktionsbehälter (1) befindlichen Abwasser zuführbar ist, so dass sich in dem Reaktionsbehälter (1) eine thermisch induzierte Konvektionsströmung (50, 51) ausbildet.

2. Vorrichtung nach Anspruch 1, **dadurch gekennzeichnet, dass** der Reaktionsbehälter (1) im Wesentlichen zylindrisch ausgebildet ist, und dass das Zentralrohr (4) konzentrisch zu der Achse (1a) ist, sowie dass der Wärmetauscher (5) vorzugsweise konzentrisch zur Achse des Reaktionsbehälters (1) angeordnet ist.

3. Vorrichtung nach einem der Ansprüche 1 bis 2, **dadurch gekennzeichnet, dass** der Wärmetauscher (5) im unteren Bereich des Reaktionsbehälters (1), jedoch im Abstand vom Boden (3) des Reaktionsbehälters (1) angeordnet ist und als Spiralrohrwärmetauscher ausgebildet ist.

4. Vorrichtung nach einem der Ansprüche 1 bis 3, **dadurch gekennzeichnet, dass** der Wärmetauscher (5) innerhalb eines Behälterabschnitts angeordnet ist, der zwischen 25% und 50% der Querschnittsfläche des Reaktionsbehälters (1) einnimmt und der vorzugsweise zwischen 10% und 40% der Höhe des Reaktionsbehälters (1) einnimmt.

5. Vorrichtung nach einem der Ansprüche 1 bis 4, **dadurch gekennzeichnet, dass** der Wärmetauscher (5) seitlich eine Ummantelung (8) aufweist, die vorzugsweise zylindrisch ausgebildet ist und dass oberhalb des Wärmetauschers (5) eine Umlenkeinrichtung (11) für Reaktionsgase angeordnet ist.

6. Vorrichtung nach einem der Ansprüche 1 bis 5, **dadurch gekennzeichnet, dass** im oberen Bereich des Reaktionsbehälters (1) eine Abzugseinrichtung (12) für das behandelte Abwasser mit labyrinthförmig angeordneten Führungsblechen (13, 14) angeordnet ist.

7. Vorrichtung nach einem der Ansprüche 1 bis 6, **dadurch gekennzeichnet, dass** dem Reaktionsbehälter (1) eine Wärmepumpe (44) zugeordnet ist, die in ihrem Wärmekreislauf (45) mit dem Wärmetauscher (5) in Verbindung steht und die mit ihrem Kältekreislauf (46) mit einer Abzugsleitung (20) zur Abkühlung des behandelten Abwassers in Verbindung steht.

8. Vorrichtung nach einem der Ansprüche 1 bis 7, **dadurch gekennzeichnet, dass** neben dem Wärmetauscher (5) sämtliche Zufuhrleitungen (41), Abzugsleitungen (20), Wärmeträgerleitungen (23) und eventuelle Sensoreinrichtungen baulich mit dem Zentralrohr (4) verbunden sind und gemeinsam mit diesem von einem feststehenden Teil des Reaktionsbehälters (1), der im Wesentlichen den Boden (3) und die Seitenwände (2) umfasst, trennbar ist.

9. Vorrichtung nach einem der Ansprüche 1 bis 8, **dadurch gekennzeichnet, dass** das Zentralrohr (4) einen Hohlraum (40) aufweist, in den oben das zu behandelnde Abwasser eingeführt wird und der im unteren Bereich über Öffnungen (39) mit dem Reaktionsbehälter (1) in Verbindung steht, und dass der Hohlraum (40) in thermischem Kontakt mit dem Innenraum des Reaktionsbehälters (1) steht und vorzugsweise ein Volumen aufweist, das zwischen 2% und 10%, besonders vorzugsweise zwischen 3% und 5% des Volumens des Reaktionsbehälters (1) beträgt.

10. Vorrichtung nach einem der Ansprüche 1 bis 9, **dadurch gekennzeichnet, dass** im Reaktionsbehälter (1) mindestens ein Probenentnahmerohr (36) vorgesehen ist, das eine Probenansaugöffnung (36a) aufweist, die außerhalb des Wärmetauschers (5) in einer Höhe (H₃) in den Reaktionsbehälter (1) mündet, die vorzugsweise im Bereich (H₁, H₂) der Höhe des Wärmetauschers (5) liegt.

11. Vorrichtung nach einem der Ansprüche 1 bis 10, **dadurch gekennzeichnet, dass** der Abzugsraum (17) eine Oberkante (34) aufweist, über die Abwasser in einen anschließenden Aufnahmeraum (33) überströmen kann und dass der Abzugsraum (17) nach oben offen ist.

12. Vorrichtung nach einem der Ansprüche 1 bis 11, **dadurch gekennzeichnet, dass** ein Gasraum (28) mit einem Gasabzugsventil (31) im Verbindung steht, um die Oberfläche (29) des Abwassers im gewünschten Bereich zu halten.

13. Verfahren zur anaeroben Behandlung von Abwasser, bei dem das zu behandelnde Abwasser in einen Reaktionsbehälter (1) geführt wird und unter Luftabschluss eine vorbestimmte Zeit reagieren gelassen wird, wobei dem Abwasser Wärme zugeführt wird, **dadurch gekennzeichnet, dass** die Wärme über einen im Reaktionsbehälter (1) angeordneten Wärmetauscher (5) in einem Teil des Reaktionsbehälters (1) so zugeführt wird, dass sich in dem Reaktionsbehälter (1) eine thermisch induzierte Konvektionsströmung (50, 51) ausbildet.

14. Verfahren nach Anspruch 13, **dadurch gekennzeichnet, dass** das Abwasser dem Reaktionsbehälter (1) über ein Zentralrohr (4) diskontinuierlich zugeführt wird, in dem das Abwasser durch thermischen Kontakt mit dem Abwasser im Reaktionsbehälter (1) und gegebenenfalls mit dem Wärmetauscher (5) erwärmt wird, und dass das bei einem Befüllvorgang zugeführte Abwasservolumen kleiner ist als das Volumen des Zentralrohres (4).

15. Verfahren nach einem der Ansprüche 13 bis 14, **dadurch gekennzeichnet, dass** über die Außenwand (2) des Reaktionsbehälters (1) Wärme abgeführt wird und dass gegebenenfalls durch eine Wärmepumpe dem aus dem Reaktionsbehälter (1) abgezogenen Abwasser Wärme entzogen wird und dem Wärmetauscher (5) in dem Reaktionsbehälter (1) zugeführt wird, um das Abwasser in dem Reaktionsbehälter (1) auf einer Temperatur zu halten, die vorzugsweise in einem Bereich zwischen 25°C und 35°C liegt.
